# EUROPEAN PATENT APPLICATION

(11) **EP 4 063 249 A1**
(43) Date of publication of application: **28.09.2022**
(21) Application number: 22161504.0
(22) Date of filing: 11.03.2022
(51) Int. Cl.: B62K 11/04, B62H 1/04, B62M 7/06, B62K 25/28

(54) **A MOTOR VEHICLE WITH AT LEAST TWO WHEELS**

(30) Priority: 23.03.2021 IN 202141012385
(71) Applicant: TVS Motor Company Limited, 600006 Chennai (IN)
(72) Inventor: Meibalan, Mugilan, 600 006 Chennai (IN); Rawat, Ankit, 600 006 Chennai (IN); Subramonian, Chitambaram, 600 006 Chennai (IN)
(74) Representative: Patentanwaltskanzlei Matschnig & Forsthuber OG

(57) **Abstract**

The present subject matter relates to a two or three wheeled motor vehicle. More particularly to vehicle layout of the two wheeled vehicle for packaging of one or more electric motors in the vehicle. The motor vehicle (100) with at least two wheels, said vehicle (100) comprising a rear wheel (102), a swing arm assembly (204), a rear portion of said swing arm assembly (204) being swingably connected to a portion of said rear wheel (102), and a front portion of said swing arm assembly (204) being connected to a portion of frame assembly and a motor assembly (201) configured to power said vehicle (100), wherein the motor assembly (201) is supported on said swing arm assembly (204) through a mounting structure (202).

## Description

### TECHNICAL FIELD

The present subject matter relates to a two or three wheeled motor vehicle. More particularly but not exclusively, to vehicle layout of the two wheeled vehicle for packaging of one or more electric motors in the vehicle.

### BACKGROUND

In conventional vehicles, one or more electric motors are packaged in the vehicle. The electrically powered automotive vehicles include drive motors which require minimum space and are capable of driving the vehicle wheels through simple mechanical interconnections. The various arrangements of drive motors include a hub mounted motor and a shaft rotating motor. The hub mounted motor is one such arrangement where the vehicle drive motor is mounted directly within each vehicle wheel. There are arrangements including motors mounted to part of chassis. Conventionally, the one or more motors along are disposed either on right side or left side of the vehicle.

### BRIEF DESCRIPTION OF THE DRAWINGS

The detailed description is described with reference to an embodiment of a two wheeled motor vehicle with accompanying figures. The same numbers are used throughout the drawings to reference like features and components.
**Figure 1** depicts a left-side view of an exemplary saddle type vehicle.
**Figure 2** illustrates a left-side rear perspective view of a rear structure of the two wheeled type motor vehicle.
**Figure 3** illustrates a left-side rear perspective view of an exploded view of a rear side of the saddle type vehicle.
**Figure 4** illustrates an assembled view of a motor assembly and a support structure for the motor assembly.
**Figure 5** illustrates an exploded view of a mounting structure for the motor assembly.

### DETAILED DESCRIPTION OF THE INVENTION

The motors mounted directly on to the wheels of the vehicle are associated with various problems. In particular, the hub motors are mounted to a rear wheel in the vehicle. The mounting of the hub motors to the rear wheel of the vehicle has various restrictions. The restrictions with respect to the capacity of the motor is prevalent. The hub motors are always smaller capacity motors due to the configuration of being able to be supported on the rear wheel. The higher capacity hub motor would be a bigger motor in size. The bigger hub motor cannot be practically supported on the rear wheel unless the wheel size is increased, which is undesirable. Therefore, a higher capacity hub motor cannot be mounted in the vehicle as the higher capacity increases the weight of the rear wheel. Generally, the vehicles incorporating hub motors are of lesser capacity of motors, which provides lesser torque and less power. Further, the hub motor being part of the rear wheel includes the restriction of natural cooling. The hub motors typically suffer from inadequate cooling as the motors are present inside the wheels. The heat emitted due to the normal functionality of the motor is restricted from being dissipated to the outer atmosphere. The trapped heat inside the motor and the wheel may cause deformation of metallic parts of the wheel. Further, all the shocks and loads transferred to the wheels by the roads are transferred to the hub motors as well. The mountings of the hub motor with the rear wheel tend to get displaced or loosen over a period of time. The displaced hub motor may cause serious irreversible hazards. Further, certain other problems like deformation or bending of wheel rim is observed due to the weight of the hub motor. The phenomenon of deformation or bending of wheel rim may cause leakage of water inside the hub motor and leads to short circuit of the motor. Disposing the drive motor in any other location in the vehicle adversely impacts the compactness of the vehicle and its layout and thus not desirable. Thus, there is a need for an improved layout configuration of a hub motor mounting for a compact saddle type vehicle which overcomes all above problems and other problems of known art.

To overcome the above stated problem, the present subject-matter provides a new layout configuration for locating the motor along with a simple mechanism of mounting a shaft motor in the vehicle. The shaft motor is mounted in the vehicle over a mounting structure which in turn is configured to be mounted over the swing-arm structure of the vehicle. The mounting structure is configured to with-stand the load from the motor assembly during vehicle running condition (road load), thereby considerably reducing any load or shocks from reaching the motor assembly.

According to an embodiment of the present subject matter, a two wheeled motor vehicle comprising a rear wheel, a swing arm assembly, a rear portion of said swing arm assembly being swingably connected to a portion of said rear wheel, and a front portion of said swing arm assembly being connected to a portion of frame assembly, and a motor assembly configured to power said vehicle is provided. The motor assembly is supported on said swing arm assembly.

According to an embodiment of the present subject matter, the swing arm assembly is adapted to support the motor assembly, the swing arm assembly is configured with a cross-member, the cross-member is attached to a rear portion of the swing arm assembly.

According to an embodiment of the present subject matter swing arm assembly includes a pair of horizontal members. The pair of horizontal members are extended along a vehicle longitudinal direction passing from vehicle front to rear direction. The cross member is disposed across said pair of horizontal members.

According to an embodiment of the present subject matter, the cross-member is a U-shaped structure disposed above and around the rear wheel, the cross-member is extended forwardly away from the rear wheel and towards the motor assembly.

According to an embodiment of the present subject matter, the motor assembly is mounted on a mounting structure, the mounting structure being mounted upon the swing arm assembly.

According to an embodiment of the present subject matter, the mounting structure includes a pair of L-channels, one or more connecting members disposed between said pair of L-channels, a vertical member supported orthogonally by any one L-channel of said pair of L-channels, said vertical member being disposed at a pre-determined distance from said any one L-channel of said pair of L-channels.

According to an embodiment of the present subject matter, the vertical member is a plate like structure. The vertical member includes an opening configured to expose any one side of two sides of said motor assembly. The pair of L-channels, the vertical member and the one or more connecting members are fixedly attached to each other.

According to an embodiment of the present subject matter, the vertical member is configured with one or more holes, the vertical member is adapted to detachably mount a first side of two sides of the motor assembly through one or more mounting members passing through said one or more holes. The one or more mounting members include, for example, fastening members like bolts and nuts.

According to an embodiment of the present subject matter, the first side is configured to rotatably support a drive gear. The rear wheel is configured to rotatably support a driven gear, a transmission member is supported by and in between the drive gear and the driven gear. The transmission member is rotatable about said drive gear and said driven gear. The transmission from the drive gear is transmitted to the driven gear through the transmission member.

According to an embodiment of the present subject matter, the mounting structure includes one or more secondary connecting members attached to said one or more connecting members. The secondary connecting members are configured to provide stiffness to the one or more connecting members, such that the one or more connecting members are able to withstand the load of the motor assembly. In an embodiment of the present subject matter, the one or more connecting members and the one or more secondary connecting members are hollow tubes.

According to an embodiment of the present subject matter, the one or more connecting members includes a first connecting member, a second connecting member, and a third connecting member. The first connecting member is disposed in between and at a first end of said pair of L-channels. The first connecting member is joining the pair of L-channels. The second connecting member is disposed at an opposite end to the first end and disposed in between any one L-channel of pair of L-channels and the vertical member. The third connecting member is disposed in between and connecting a portion of the vertical member and any one L-channel of the pair of L-channels.

According to an embodiment of the present subject matter, the motor assembly is disposed in between the first connecting member and the second connecting member.

According to an embodiment of the present subject matter, the first connecting member is longer than second connecting member and third connecting member. The second connecting member is shorter than first connecting member and longer than third connecting member. The third connecting member is shorter than the first connecting member and is longer than the second connecting member.

According to an embodiment of the present subject matter, one or more stiffening members are disposed between a portion of the vertical member and any one L-channel of the pair of L-channels.

According to an embodiment of the present subject matter, the pair of L-channels include one or more 'C' shaped members mounted to a portion of the pair of L-channels. The one or more 'C' shaped members are configured to hug a portion of the swing arm assembly.

According to an embodiment of the present subject matter, the cross-member includes pair of arms connected at one end, any one arm of the pair of arms is configured to support a portion of the vertical member through a secondary mounting structure.

In an embodiment, the mounting structure consists of sheet metal plates and hollow tubes arrangement such that it can be easily mounted or attached to the swing-arm of the vehicle.

The further explanation to the above said advantages of the present invention are provided in the detailed description of the figures below. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

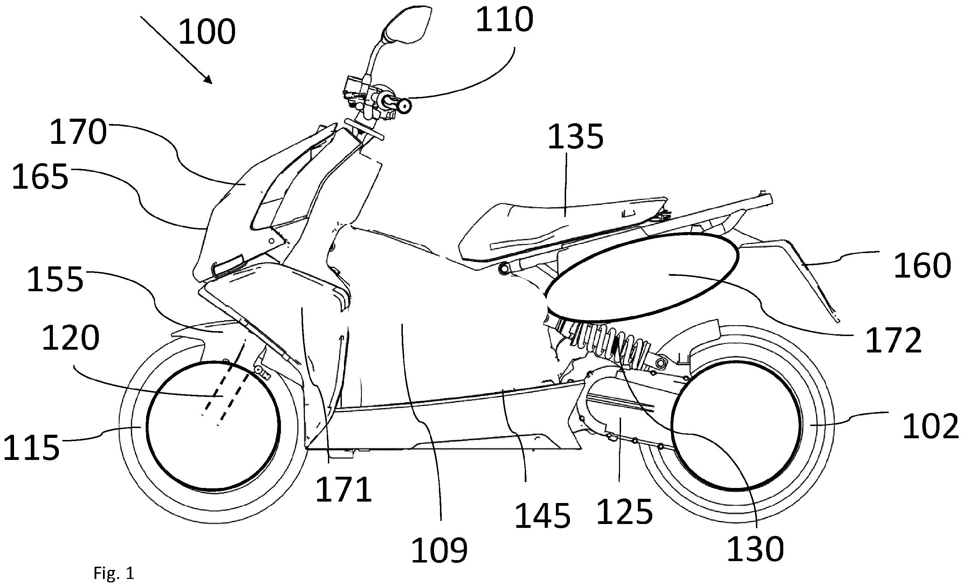

Figure 1 depicts a left-side view of an exemplary saddle type vehicle. The vehicle includes a handlebar assembly 110 connected to a front wheel 115 through one or more front suspension(s) 120. A steering shaft (not shown) connects the handlebar assembly 110 to the front suspension(s) 120 and the steering shaft is rotatably journaled about a front frame (not shown). A power source/an energy source 125, for example an engine assembly, or one or more batteries are mounted to the frame assembly (not shown). In the depicted embodiment, the power source/the energy source 125 is disposed below at least a portion of the pair of rear frames (not shown). The power source/energy source 125 is functionally connected to a rear wheel 102 through a transmission system (not shown). The vehicle 100 may include one or more rear wheel(s). Also, the vehicle 100 includes an exhaust system that helps in dissipation of exhaust gasses from the power source/energy source 125. The exhaust system includes a muffler mounted to the vehicle 100.

Further, the rear wheel 130 is connected to the frame assembly through one or more rear suspension(s). In the depicted embodiment, the power source 125 is swingably mounted to the frame assembly 105 (not shown) through a toggle link or the like. A seat assembly 135 is supported by the frame assembly 105 and is disposed rearward to the step-through portion 109.

Further, the vehicle 100 includes a front fender 155 covering at least a portion of the front wheel 115. In the present embodiment, a floorboard 145 is disposed at a step-through portion 109 and is supported by the main frame (not shown) and a pair of floor frame portions (not shown). A rear fender 160 is covering at least a portion of the rear wheel 102. The vehicle 100 comprises of plurality of electrical/electronic components including a headlight 165, a tail light (not shown), a battery (not shown), a transistor-controlled ignition (TCI) unit (not shown), an alternator (not shown), a starter motor (not shown). Further, the vehicle 100 may include a synchronous braking system, an anti-lock braking system.

The vehicle 100 comprises plurality of panels that include a front panel 170 disposed in an anterior portion of a front portion of the frame assembly, a leg-shield 171 disposed in a posterior portion of the front frame. A rear panel assembly 172 includes a right-side panel and a left side panel disposed below the seat assembly 135 and extending rearward from a rear portion of the floorboard 145 towards a rear portion of the vehicle 100. The rear panel assembly 172 encloses a utility box (not shown) disposed below the seat assembly 135.

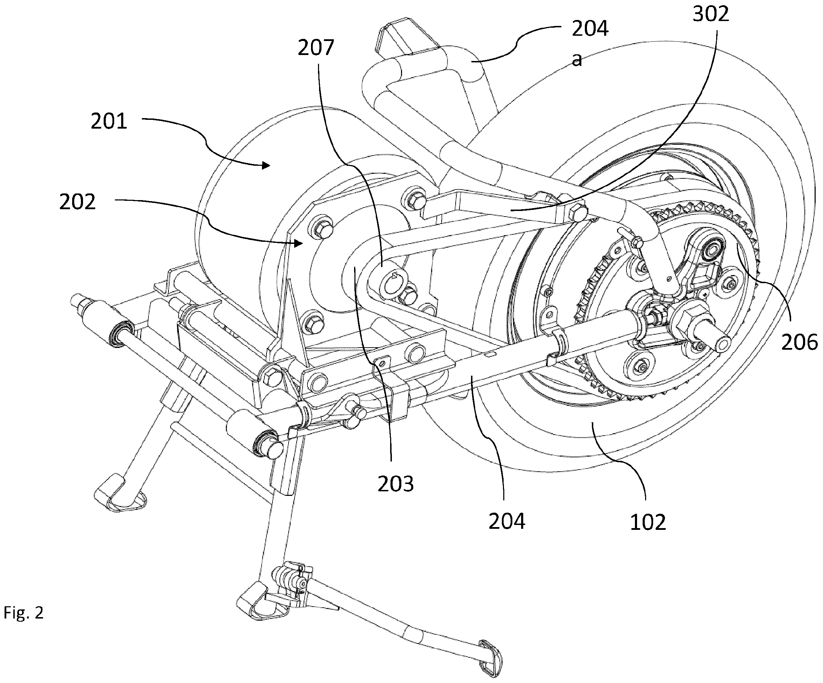

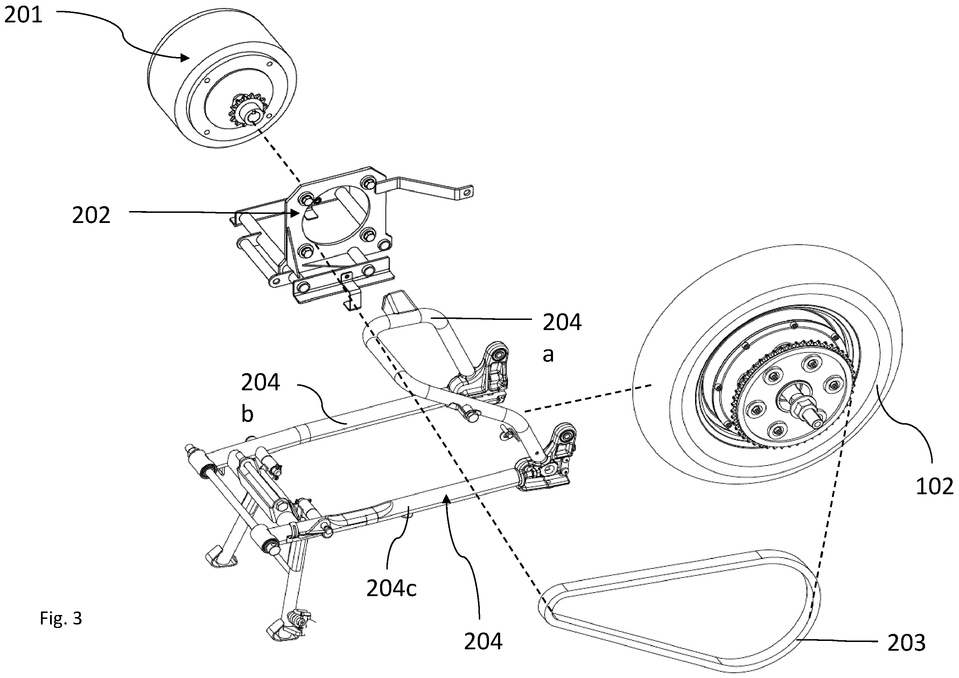

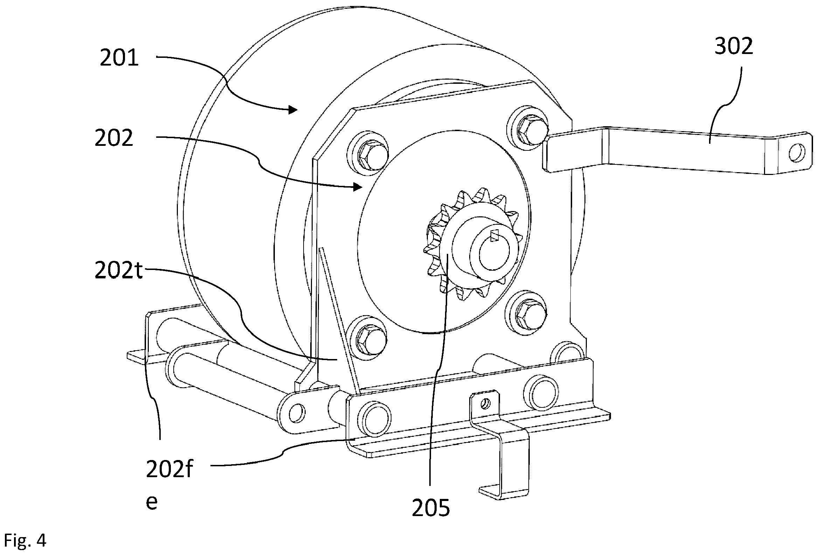

**Figure 2** illustrates a left-side rear perspective view of a rear structure of the two wheeled type motor vehicle. According to an embodiment of the present invention, in a particular layout, a motor assembly 201 is mounted on a swing-arm assembly 204 of the vehicle 100. The motor assembly 201 is mounted on the swing arm assembly 204 through a mounting structure 202. The motor assembly 201 and the rear wheel 102 are connected with each other through a drive gear 205 (shown in Figure 3), the transmission in particular includes, a chain-sprocket mechanism. The motor assembly 201 includes an output shaft 207, the drive gear 205 (shown in Figure 4) is rotatably mounted to the output shaft 207 of the motor assembly 201. The drive gear 205 (shown in Figure 4) has extruded boss with internal slot, in order to be key-joined with the output shaft 207. A driven gear 206 is mounted to the rear wheel 102 of the vehicle 100.

According to an embodiment of the present subject matter, the swing arm assembly 204 is configured with a cross-member 204a. The cross member 204a is adapted to support a portion of the mounting structure 202 through a secondary support member 302. In an embodiment, the secondary support member 302 is fixedly attached to a portion of the mounting structure 202 at one end and another end of the secondary support member 302 is detachably attached to a portion of the swing arm assembly 204a.

**Figure 3** illustrates a left-side exploded perspective view of a rear side of the saddle type vehicle. According to an embodiment of the present invention, the swing arm assembly includes two arms, a right arm 204b and a left arm 204c. The swing arm assembly is extending along the vehicle longitudinal direction LM. The mounting structure 202 is mounted on and substantially supported on a portion of both the right arm 204b and the left arm 204c. The mounting structure 202 is fixedly attached to the swing arm assembly 204. The mounting structure 202 is configured to support the motor assembly 201 substantially. A portion of the mounting structure 202 is configured to expose a portion of the motor assembly 201, such that a transmission member 203 is rotatably disposed between a portion of the motor assembly 201 and the rear wheel 102.

In an embodiment of the present subject matter, a portion of the cross-member 204a is extending above a portion of the mounting structure 202 when viewed from a top view.

**Figure 4** illustrates an assembled view of a motor assembly and a support structure for the motor assembly 201. The mounting structure 202 provides freedom of having a higher capacity motor assembly 201. The mounting structure 202 is configured such that the forward or upward extension in the size of the motor assembly 201 is accommodated and supported by the mounting structure 202 while still achieving a compact layout packaging of the vehicle.

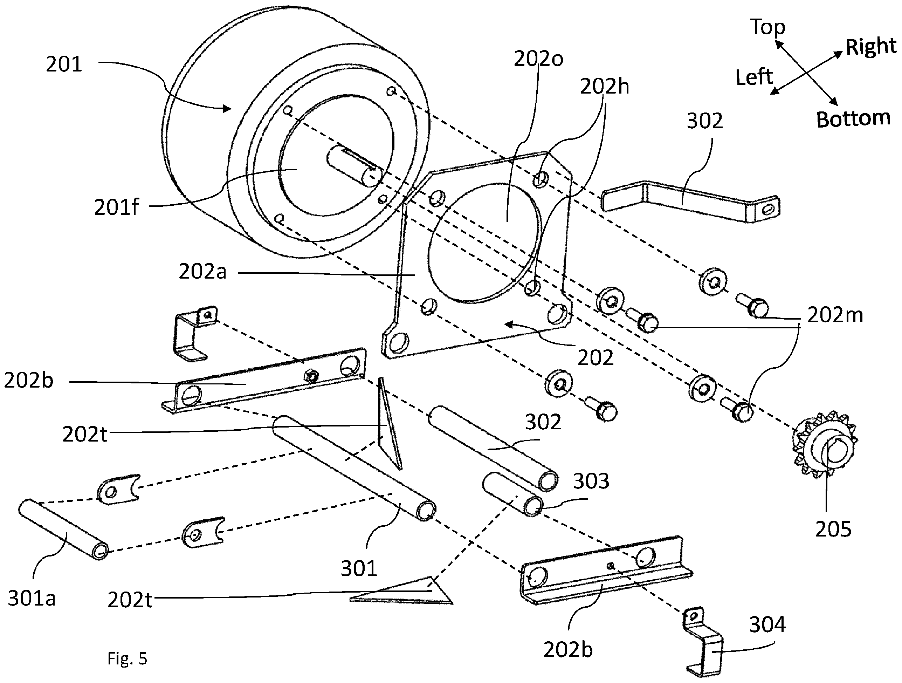

**Figure 5** illustrates an exploded view of a mounting structure for the motor assembly. The mounting structure 202 includes a vertical member 202a. The vertical member 202a is configured to mount the motor assembly through one or more attaching members 202m. The one or more attaching members 202m are for example, fasteners, one or more bolts, etc. The vertical member 202a is fixedly attached to one or more connecting members 301, 302, 303. The one or more connecting members 301, 302, 303 in the present embodiment include three hollow tubes. The one or more connecting members 301, 302, 303 are disposed along a lateral direction of vehicle extending in a left-right direction of the vehicle. The one or more connecting members 301, 302, 303 are configured to bare the inertial load of the motor assembly 201 via the vertical member 202a. The one or more connecting members 301, 302, 303 include three horizontal tubes of different lengths.

The one or more connecting members 301, 302, 303 include a first connecting member 301 being disposed at a left most portion of the mounting structure 202. The first connecting member 301 is the longest tube and is attached, for example, welded between a pair of L-channels 202b. The first connecting member 301 passes through the vertical member 202a and is welded to the vertical member 202a. The third connecting member 303 is the shortest of the one or more connecting members 301, 302, 303 and is welded between any one of a L-channel of the pair of L-channels 202b. The second connecting member 302 is disposed in a right most portion of the mounting structure 202. The second connecting member 302 is welded between the vertical member 202a and any one of a L-channel of the pair of L-channels 202b. The vertical member 202a is configured such that the position, orientation and a center distance CD between a drive gear 205 and a driven gear 206 of the vertical member 202a is achieved to efficiently support the motor assembly 201. Further, the above said configuration of the vertical member 202a is critical to attain required length between L-channels in the pair of L-channels 202b, as the alignment of the transmission member (shown in Figure 3) and the center distance CD between the drive gear 205 and the driven gear (shown in Figure 3 206) is governed by the mounting structure 202. The length of the one or more connecting members 301, 302, and 303 are configured as per an embodiment of the present invention to control the position, orientation and the center distance CD with respect to the vertical member 202a.

In an embodiment of the present invention, in order to provide structural rigidity to the vertical member 202a, one or more stiffening members 202t are provided between the vertical member 202a and one or more connecting members 301, 302, and 303, to support the vertical member 202a and prevent the vertical member 202a from deformation including bending under load condition (motor inertia load or road load). In an embodiment, the one or more stiffening members 202t are welded to the third connecting member 302 and the vertical member 202a. Whereas, the one or more stiffening members 202t are welded to the first connecting member 301 and the vertical member 202a. one or more stiffening members 202t are configured to provide the functionality of a load bearing member to obtain desired structural stability to the mounting structure 202.

In an embodiment, the vertical member 202a is adapted to detachably mount a first side 201f of two sides of said motor assembly 201 through one or more mounting members 202m passing through said one or more holes 202h. The first side 201f is configured to rotatably support a drive gear 205.

In an embodiment, the first connecting member 301 is disposed in between and at a first end 202fe of said pair of L-channels 202b. The second connecting member 302 is disposed at an opposite end to said first end 202fe and disposed in between any one L-channel of pair of L-channels 202b and said vertical member 202a, and said third connecting member 303 is disposed in between and connecting a portion of said vertical member 202a and any one L-channel of said pair of L-channels 202b.

In an embodiment the motor assembly 201 is supported between the first connecting member 301 and said second connecting member 302. Further, in an embodiment of the present subject matter, the vertical member 202a is supported by a secondary mounting structure 305. The secondary mounting structure 305 is mounted on a portion of the swing-arm assembly. In the present embodiment, the secondary mounting structure 305 is mounted on the cross member 204a and attached, for example, welded to the vertical member 202a. This secondary mounting structure 305 is detachably attached to the cross-member 204a of the swing arm assembly 204. The cross-member 204a is configured to provide the functionality of rigidity to the right arm 204b and the left arm 204c of the swing-arm assembly 204, the rigidity provided is configured to act against the road dynamic loads, torsion effects and as a result, prevent any undesirable deformation of the swing arm assembly 204.

As a result, the vertical member 202a is supported by the one or more connecting members 301, 302, 303, one or more stiffening members 202t and the secondary mounting structure 305.

Further, the first connecting member 301 is welded to the pair of L-channels 202b, such that the pair of L-channels 202b facilitate mounting of the mounting structure 202 on the swing-arm assembly 204. In another embodiment, one or more secondary connecting members 301a are fixedly attached to the first connecting member 301. first connecting member 301 is a lateral hollow tube that is configured to allow a long bolt to pass through it and facilitate the mounting of one or more other vehicular parts.

Further, in an embodiment, in order to arrest the lateral movement of the mounting structure and to provide one or more degree of rigidity to the vertical movement, one or more 'C' shaped members 304 are provided. one or more 'C' shaped members 304 are detachably attached to the pair of L-channels 202b respectively while these additionally fencing the right arm 204b and left arm 204c of the swing-arm assembly 204 as shown. In assembled condition, the one or more 'C' shaped members 304 and the mounting structure 202 get locked completely with the swing-arm assembly 204.

Although the subject matter has been described in considerable detail with reference to certain embodiments thereof, other embodiments are possible. It is to be understood that the aspects of the embodiments are not necessarily limited to the features described herein.

### Reference Numerals:

- 100: vehicle
- 105: frame assembly
- 109: step-through portion
- 110: handlebar assembly
- 115: front wheel
- 120: one or more front suspension(s)
- 125: power source/an energy source
- 130: rear wheel
- 135: the seat assembly
- 145: floorboard
- 155: front fender
- 160: rear fender
- 165: headlight
- 170: front panel
- 171: leg-shield
- 172: rear panel assembly
- 201: motor assembly
- 202: mounting structure
- 202a: vertical member
- 202b: pair of L-channels
- 202m: one or more mounting members
- 202t: one or more stiffening members
- 204: swing-arm assembly
- 204b: right arm
- 204c: left arm
- 205: drive gear
- 206: driven gear
- 207: output shaft
- 301: first connecting member
- 302: second connecting member
- 303: third connecting member
- 301, 302, 303: one or more connecting members
- 302: secondary support member
- 304: one or more 'C' shaped members
- 305: secondary mounting structure
- CD: center distance

## Claims

1. A motor vehicle (100) with at least two wheels, said vehicle (100) comprising:
a rear wheel (102);
a swing arm assembly (204), a rear portion of said swing arm assembly (204) being swingably connected to a portion of said rear wheel (102), and a front portion of said swing arm assembly (204) being connected to a portion of frame assembly;
a motor assembly (201) configured to power said vehicle (100),
wherein said motor assembly (201) is supported on said swing arm assembly (204).

2. The two wheeled motor vehicle (100) as claimed in claim 1, wherein said swing arm assembly (204) is adapted to support said motor assembly (201), said swing arm assembly (204) is configured with a cross-member (204a), said cross-member (204a) is attached to said rear portion of said swing arm assembly (204).

3. The two wheeled motor vehicle (100) as claimed in claim 2, wherein said swing arm assembly (204) includes a pair of horizontal members (204b, 204c), said pair of horizontal members (204b, 204c) are extending along a vehicle longitudinal direction (LM) passing from vehicle front to rear direction, said cross member (204a) is disposed across said pair of horizontal members (204a, 204b), wherein preferably said cross-member (204a) is a U shaped structure disposed around said rear wheel (102), said cross-member (204) is extending forwardly away from said rear wheel (102) and towards said motor assembly (201).

4. The two wheeled motor vehicle (100) as claimed in any one of the preceding claims, wherein said motor assembly (201) is mounted on a mounting structure (202), said mounting structure (202) being mounted upon said swing arm assembly (204).

5. The two wheeled motor vehicle (100) as claimed in claim 4, wherein said mounting structure (202) includes a pair of L-channels (202b), one or more connecting members (301, 302, and 303) disposed between said pair of L-channels (202b), a vertical member (202a) supported orthogonally by any one L-channel of said pair of L-channels (202b), said vertical member (202a) is disposed at a pre-determined distance from said any one L-channel of said pair of L-channels (202b).

6. The two wheeled motor vehicle (100) as claimed in claim 5, wherein said vertical member (202a) is a plate like structure, said vertical member (202a) includes an opening configured to expose any one side of two sides of said motor assembly (201), said pair of L-channels (202b), said vertical member (202a) and said one or more connecting members (301, 302, and 303) are fixedly attached to each other.

7. The two wheeled motor vehicle (100) as claimed in claims 5 or 6, wherein said vertical member (202a) is configured with one or more openings (202h), said vertical member (202a) is adapted to detachably mount a first side (201f) of two sides of said motor assembly (201) through one or more mounting members (202m) passing through said one or more holes (202h).

8. The two wheeled motor vehicle (100) as claimed in claim 7, wherein said first side (201f) is configured to rotatably support a drive gear (205), said rear wheel (102) is configured to rotatably support a driven gear (206), a transmission member (203) is rotatably disposed in between said drive gear (205) and said driven gear (206), said transmission member (203) is rotatable about said drive gear (205) and said driven gear (206).

9. The two wheeled motor vehicle (100) as claimed in any one of claims 5 to 8, wherein said mounting structure (202) includes one or more secondary connecting members (301a) attached to said one or more connecting members (301, 302, and 303).

10. The two wheeled motor vehicle (100) as claimed in any one of claims 5 to 9, wherein said one or more connecting members (301, 302, and 303) includes a first connecting member (301), a second connecting member (302), and a third connecting member (303), said first connecting member (301) is disposed in between and at a first end (202fe) of said pair of L-channels (202b), said first connecting member (301) is joining said pair of L-channels (202b), said second connecting member (302) is disposed at an opposite end to said first end (202fe) and disposed in between any one L-channel of pair of L-channels (202b) and said vertical member (202a), and said third connecting member (303) is disposed in between and connecting a portion of said vertical member (202a) and any one L-channel of said pair of L-channels (202b), wherein preferably said motor assembly (201) is disposed in between said first connecting member (301) and said second connecting member (302).

11. The two wheeled motor vehicle (100) as claimed in any one of claims 5 to 10, wherein said first connecting member (301) is longer than second connecting member (302) and third connecting member (303), said second connecting member (302) is shorter than first connecting member (301) and longer than third connecting member (303), and said third connecting member (303) is shorter than said first connecting member (301) and second connecting member (302).

12. The two wheeled motor vehicle (100) as claimed in any one of claims 5 to 11, wherein one or more stiffening members (202t) are disposed between a portion of said vertical member (202a) and any one L-channel of said pair of L-channels (202b).

13. The two wheeled motor vehicle (100) as claimed in any one of claims 5 to 12, wherein said pair of L-channels (202b) include one or more 'C' shaped members (304) mounted to a portion of said pair of L-channels (202b), said one or more 'C' shaped members (304) are configured to enclose a portion of said swing arm assembly (204).

14. The two wheeled motor vehicle (100) as claimed in claims 2 or 3 and any one of claims 5 to 13, wherein said cross-member (204a) is configured to support a portion of said vertical member (202a) through a secondary mounting structure (305).

15. A mounting structure (202) for a motor assembly (201) of a two wheeled motor vehicle (100), said mounting structure (202) comprising:
a pair of L-channel (202b);
one or more connecting members (301, 302, 303) disposed between said pair of L-channel (202b);
a vertical member (202a) disposed orthogonally to any one L-channel of said pair of L-channel (202b), wherein preferably said vertical member (202a) is disposed at a pre-determined distance from any one L-channel of said pair of L-channel (202b), wherein preferably said pair of L-channel (202b), said one or more connecting members (301, 302, 303) and said vertical member (202a) are fixedly attached to each other.
